# EUROPEAN PATENT SPECIFICATION

(11) **EP 1 555 168 B1**
(45) Date of publication and mention of the grant of the patent: **18.06.2008**
(21) Application number: 05000484.5
(22) Date of filing: 12.01.2005
(51) Int. Cl.: B60R 21/16

(54) **Leg-protection device for vehicle occupant**
Beinschutzsystem für den Insassen in Personenkraftwagen
Dispositif pour proteger les jambes d'un occupan de vehicule

(30) Priority: 14.01.2004 JP 2004007014; 17.02.2004 JP 2004040110; 14.01.2004 JP 2004007013; 04.03.2004 JP 2004060880
(43) Date of publication of application: 20.07.2005
(73) Proprietor: TAKATA CORPORATION, Minato-ku, Tokyo 106-8510 (JP)
(72) Inventor: Abe, Kazuhiro c/o Takata Corporation, Minato-ku, Tokyo 106-8510 (JP); Kumagai, Masayoshi c/o Takata Corporation, Minato-ku, Tokyo 106-8510 (JP)
(74) Representative: Vossius & Partner

(56) References cited:
- EP-A- 0 861 762
- EP-A- 1 262 378
- EP-A- 1 300 299
- DE-A1- 19 946 477

## Description

The present invention relates to leg-protection devices for protecting the legs of vehicle occupants when vehicles collide, and more specifically it relates to a leg-protection device for an occupant of a driver's seat.

A typical leg-protection device for protecting the legs of a vehicle occupant when the vehicle collides includes a case disposed behind an instrument panel placed in front of a seat, an airbag contained in the case, and a gas generator for inflating the airbag. When the vehicle collides, the gas generator is activated and discharges gas. The discharged gas is supplied to the airbag and the airbag inflates into a space between the instrument panel and the occupant's legs to protect the occupant's legs.

EP 861762 A1 relates to a passenger airbag having an impact protection device which, in normal operation, is arranged in the instrument panel of the vehicle. The device is inflated with gas following a sensor release. The inflatable device is divided into three separately inflatable chambers comprising cushion parts i.e. into a middle cushion part and two side parts. The chambers of the two side cushion parts are filled via the gas conduit before the middle cushion part. Preferably, when inflated, the side cushion parts are spaced apart from each other by a distance corresponding to the width of a child seat.

DE 19946477 A1 relates to an airbag fitting having at least one inflatable airbag to fit against a curved surface. The airbag consists of several hose-form modules, so that a resting surface is formed by the circumferential parts facing the curved surface, e.g., of the instrument panel.

The generic JP-A-2003-226215 discloses a structure including the above mentioned type of leg-protection device below a steering column.

In the leg-protection device disclosed in the above-mentioned publication, an airbag inflates along a bottom face of a steering-column cover when the vehicle collides, and the inflated airbag protects the legs of the driver.

As shown in Fig. 1 of the above-mentioned JP-A-2003-226215, a keyhole is often provided in a side face of the steering-column cover. Therefore, when a key chain or the like (e.g., an accessory or another key) is attached to a key which is inserted in the keyhole, the key chain or the like may hang down to a space below the steering-column cover. In such a case, the key chain or the like may interfere with the airbag when the airbag inflates in the space below the steering-column cover.

An object of the present invention is to provide a leg-protection device for a vehicle occupant, the leg-protection device including an airbag which inflates in a space below a steering column (steering-column cover) without being interfered with by a key chain or the like.

This object is achieved with the features of the claims.

The leg-protection device for the vehicle occupant according to the present invention includes the projecting member which projects from the front end of the airbag in the inflating direction when the airbag inflates.
Therefore, even if a key chain or the like hangs down to below the steering-column cover when the airbag inflates along the bottom face of the steering-column cover, the projecting member comes into contact with the key chain or the like and pushes it away before the airbag comes into contact with the key chain or the like. Accordingly, the airbag is prevented from being interfered with by the key chain or the like which hangs down to below the steering-column cover when the airbag inflates along the bottom face of the steering-column cover.

According to the present invention, the projecting member is formed integrally with the airbag (integrally with panels of cloth or the like forming the airbag), and therefore the projecting member is easily provided.

The projecting member may be a small, tab-shaped member which can push away the key chain or the like.

According to an embodiment of the present invention, the projecting member is folded on the side facing the occupant or on the opposite side. In such a case, the size of the folded airbag can be reduced. The projecting member may be folded in an accordion style, a roll style, or a combination of the accordion style and the roll style.

In such a case, the airbag is preferably rolled from the top to the bottom such that the side of the airbag opposite to the occupant faces the center of the roll.

In the case in which the airbag is rolled in this manner, the rolled airbag deploys upward while rotating toward the occupant when viewed from above. Because of this rotation, when the airbag is unrolled to the top, the top edge of the airbag moves upward along a curve in the direction toward the occupant. At this time, the front-end portion of the projecting member is pushed upward by the top edge of the airbag and projects beyond the top edge of the airbag.

In the case in which the airbag is rolled from the top to the bottom such that the side of the airbag opposite to the occupant faces the center of the roll, the airbag is unrolled such that it rotates on the front portions of the occupant's legs when it inflates. Therefore, the airbag smoothly deploys without being caught by the front portions of the occupant's legs.

When the tab-shaped projecting member is bent over to the side facing the occupant or to the opposite side, a cover cloth for covering the projecting member in a folded state may be provided. In such a case, the projecting member is prevented from being unfolded and the airbag device is easily assembled. Accordingly, the folded shape of the projecting member is reliably maintained in the airbag device. When the airbag inflates, the projecting member is covered by the cover cloth until the shape of the airbag becomes close to that in the fully deployed state, and bounces upward to push away the key holder or the like at the final phase of the inflation.

According to the present invention, an upper portion of the airbag is folded inward such that the upper portion is tucked in, and the tab-shaped projecting member may be folded together with the upper portion of the airbag. In such a case, a pleat formed by folding the upper portion of the airbag inward is pushed up toward the outside of the airbag when the airbag inflates, and thereby pushes the projecting member such that the projecting member bounces upward to push the key chain or the like.

According to the present invention, the projecting member is formed independently of the airbag (independently of panels of cloth or the like forming the airbag), and therefore the projecting member can be attached at any desired position.

According to an embodiment of the present invention, the projecting member is tab-shaped and has a base end attached to the airbag on the side facing the occupant (preferably at a position near the top edge) and a front end disposed on the side opposite to the occupant such that the projecting member extends over an upper portion of the airbag. In such a case, the airbag is preferably rolled from the top to the bottom such that the side of the airbag opposite to the occupant faces the center of the roll.

In the case in which the airbag is rolled in this manner, the rolled airbag deploys upward while rotating toward the occupant when viewed from above. Because of this rotation, when the airbag is unrolled to the top, the top edge of the airbag moves upward along a curve in the direction toward the occupant. At this time, the front-end portion of the projecting member is pushed upward by the top edge of the airbag and projects beyond the top edge of the airbag.

In the case in which the airbag is rolled from the top to the bottom such that the side of the airbag opposite to the occupant faces the center of the roll, the airbag is unrolled such that it rotates on the front portions of the occupant's legs when it inflates. Therefore, the airbag smoothly deploys without being caught by the front portions of the occupant's legs.

When the tab-shaped projecting member is bent over from the side facing the occupant to the opposite side, a cover cloth for covering the projecting member in a folded state may be provided on the side opposite to the occupant. In such a case, the projecting member is prevented from being unfolded and the airbag device is easily assembled. In addition, the folded shape of the airbag is also reliably maintained in the airbag device. When the airbag inflates, the projecting member is covered by the cover cloth until the shape of the airbag becomes close to that in the fully deployed state, and bounces upward to push away the key holder or the like at the final phase of the inflation.

According to another embodiment of the present invention, the projecting member is tab-shaped and has a base end attached to the airbag on the side opposite to the occupant and a front end disposed on the side facing the occupant such that the projecting member extends over an upper portion of the airbag.

In this case, a cover cloth for covering the projecting member in a folded state may be provided on the side facing the occupant to maintain the folded shape of the projecting member.

According to the present invention, in any of the above-described embodiments, the upper portion of the airbag may be folded inward such that the upper portion is tucked in. In such a case, a pleat formed by folding the upper portion of the airbag inward is pushed up toward the outside of the airbag when the airbag inflates, and thereby pushes the projecting member such that the projecting member bounces upward beyond the top edge of the airbag.

The projecting member which extends over the upper portion may be folded in an accordion style, a roll style, or a combination of the accordion style and the roll style.

Next, embodiments of the present invention will be described below with reference to the accompanying drawings.
Fig. 1 is a diagram showing the structure of an airbag included in a leg-protection device for a vehicle occupant according to an embodiment of the present invention.
Fig. 2 is en exploded perspective view of the airbag shown in Fig. 1.
Fig. 3 is an explanatory diagram showing the manner in which the airbag shown in Fig. 1 is folded.
Fig. 4 is a vertical sectional view showing the manner in which the airbag included in the leg-protection device shown in Fig. 1 inflates.
Fig. 5 is another vertical sectional view showing the manner in which the airbag included in the leg-protection device shown in Fig. 1 inflates.
Fig. 6 is another vertical sectional view showing the manner in which the airbag included in the leg-protection device shown in Fig. 1 inflates.
Fig. 7 shows diagrams for explaining other methods for folding a projecting member.
Fig. 8 shows diagrams for explaining another method for folding the projecting member.
Fig. 9 shows diagrams for explaining other structures for bonding projecting tabs together.
Fig. 10 is a diagram for explaining another method for folding the projecting member.
Fig. 11 shows diagrams for explaining structures in which a cover cloth is disposed.
Fig. 12 is a diagram for explaining another method for folding the projecting member.
Fig. 13 is a diagram for explaining another example of a projecting member.
Fig. 14 is a sectional view for explaining the dimension of the airbag according to the embodiments.
Fig. 15 is a diagram showing the structure of an airbag included in a leg-protection device for a vehicle occupant according to an embodiment of the present invention.
Fig. 16 is an explanatory diagram showing the manner in which the airbag shown in Fig. 15 is folded.
Fig. 17 is a vertical sectional view showing the manner in which the airbag included in the leg-protection device shown in Fig. 15 inflates.
Fig. 18 is another vertical sectional view showing the manner in which the airbag included in the leg-protection device shown in Fig. 15 inflates.
Fig. 19 is an explanatory diagram showing another manner in which the airbag is folded.
Fig. 20(a) is a front view showing an airbag included in a leg-protection device for a vehicle occupant according to another embodiment, and Fig. 20(b) is a sectional view of Fig. 20(a) taken along line B-B.
Fig. 21 shows vertical sectional views of structures in which a projecting member (flap) is folded in an upper portion of an airbag.
Fig. 22 shows vertical sectional views of other structures in which a projecting member (flap) is folded in an upper portion of an airbag.
Fig. 23 is a vertical sectional view of an airbag included in a leg-protection device for a vehicle occupant according to another embodiment.
Fig. 24 is a perspective view showing a part of an airbag according to another embodiment.
Fig. 25 is a sectional view for explaining the dimension of the airbag according to the embodiments.

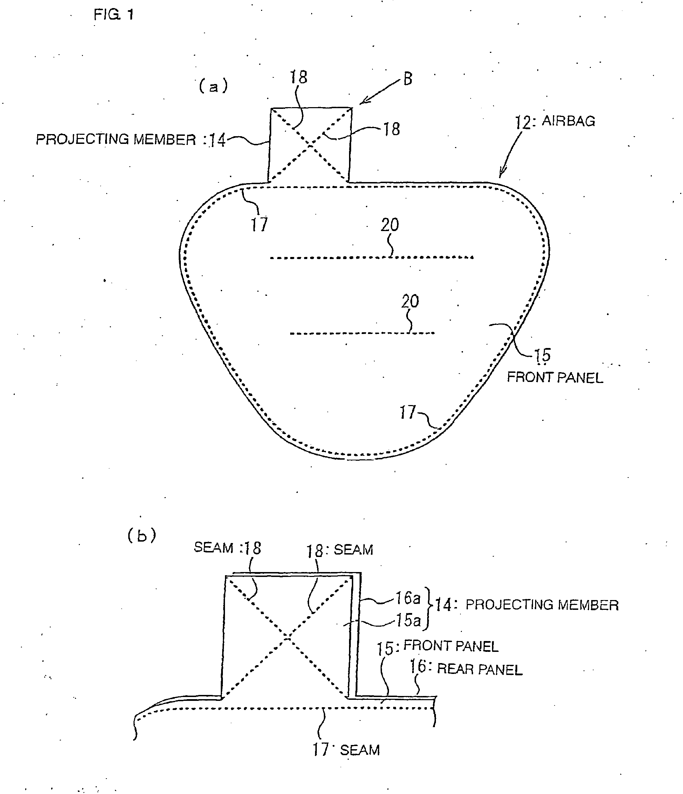

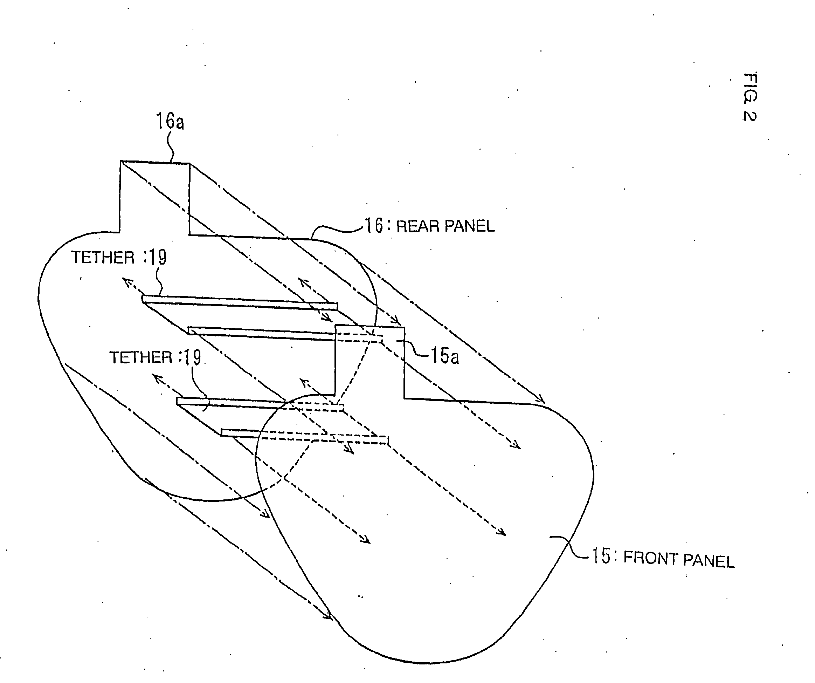

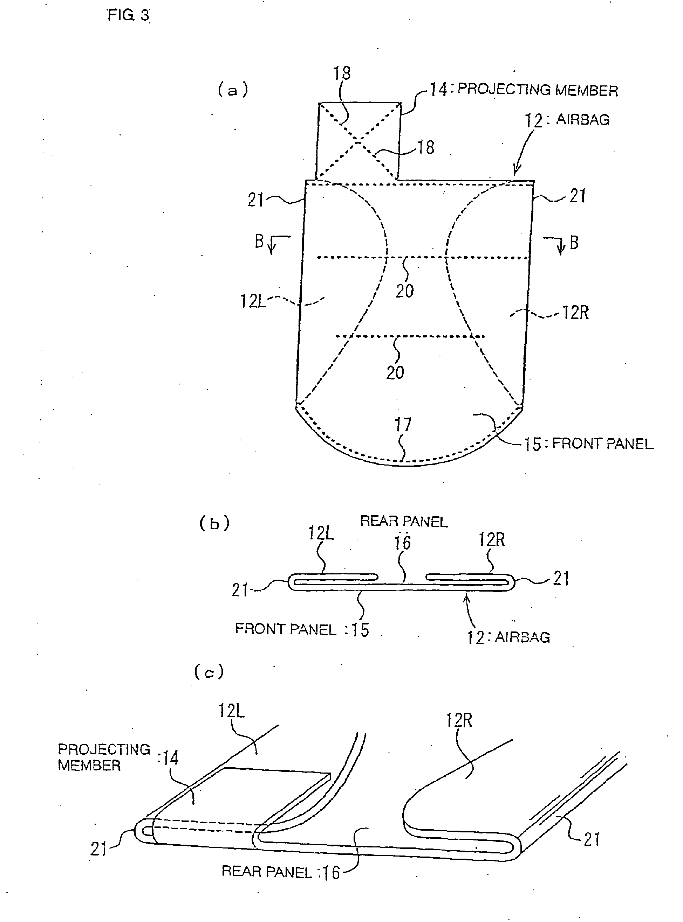

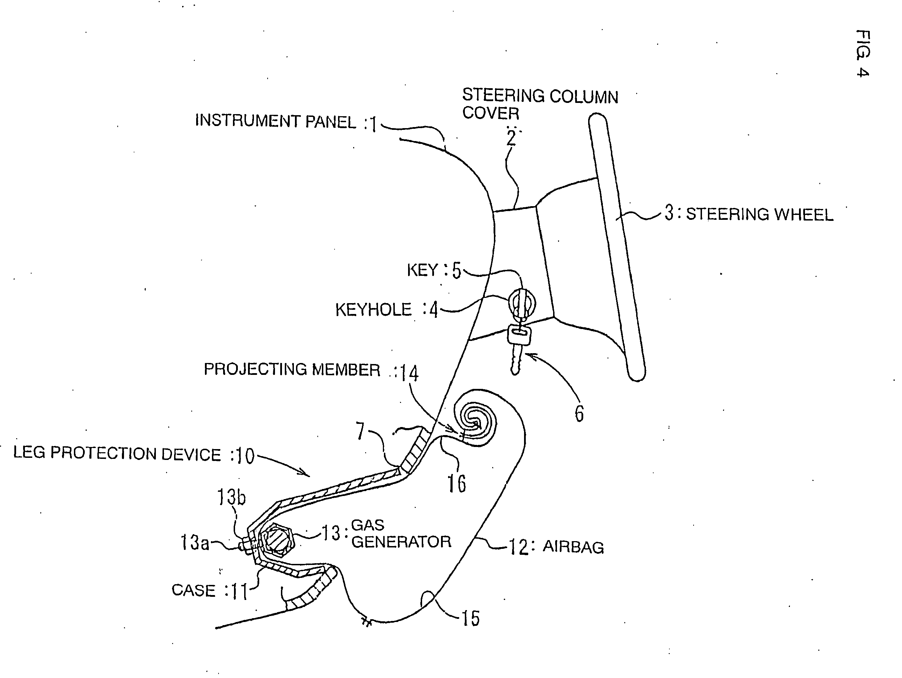

Fig. 1(a) is a front view of an airbag included in a leg-protection device for a vehicle occupant according to an embodiment of the present invention, Fig. 1(b) is an enlarged view of a part denoted by B in Fig. 1(a), and Fig. 2 is an exploded perspective view of the airbag. In addition, Fig. 3(a) is a front view showing the airbag in a partially folded state, Fig. 3(b) is a sectional view of Fig. 3(a) taken along line B-B, and Fig. 3(c) is a perspective view showing the state in which a projecting member is bent. Figs. 4 to 6 are vertical sectional views showing the manner in which the airbag inflates. In the following description, a "left-right direction" refers to the width direction of the vehicle, and is the same as the left-right direction in Fig. 1(a).

As shown in Figs. 4 to 6, an instrument panel 1 is provided in front of a driver's seat of a vehicle, and a steering-column cover 2 is provided to cover a steering column (not shown) which projects from the instrument panel 1. A steering wheel 3 is fixed to a steering shaft (not shown) which projects from the steering column.

In the present embodiment, a keyhole 4 is provided in a left side (as seen from the driver) of the steering-column cover 2. A key 5 is inserted in the keyhole 4, and a key chain 6 (shown as another key in Figs. 4 to 6) is attached to the key 5. As shown in Fig. 4, the key chain 6 is hung down beyond the bottom face of the steering-column cover 2 in a normal state (state in which the key chain 6 is not pushed up by a projecting member 14 as described below).

A leg-protection device 10 for a vehicle occupant is installed below the steering-column cover 2.

The leg-protection device 10 includes a container-shaped case 11 having an opening (no reference numeral) in the front face which faces the occupant, an airbag 12 connected to the case 11, and a gas generator 13 for inflating the airbag 12.

The case 11 is fitted in an airbag-inflation opening 7 formed in the instrument panel 1 at a position below the steering-column cover 2. In a normal state, the airbag 12 is contained in the case 11 in a folded state, and a lid (not shown) is attached to cover the opening in the front face of the case 11 containing the folded airbag 12. When the airbag 12 inflates, the lid opens by being pushed by the airbag 12 and uncovers the airbag-inflation opening 7.

The airbag 12 receives gas from the gas generator 13, starts inflating through the airbag-inflation opening 7 toward the front of the instrument panel 1, and deploys upward along the instrument panel 1 in the region below the steering-column cover 2 and then along the bottom face of the steering-column cover 2, as shown in Figs. 4 to 6.

As shown in Fig. 1(a), in the present embodiment, the airbag 12 is shaped such that the size thereof in the left-right direction (the width direction of the vehicle) increases toward the top, and is larger than the size of the steering-column cover 2 in the left-right direction at the top of the airbag 12. When the airbag 12 inflates along the bottom face of the steering-column cover 2, an upper portion of the airbag 12 faces the bottom face of the steering-column cover 2 at the central region thereof, and extends beyond the left and right sides of the steering-column cover 2 at the left and right regions thereof.

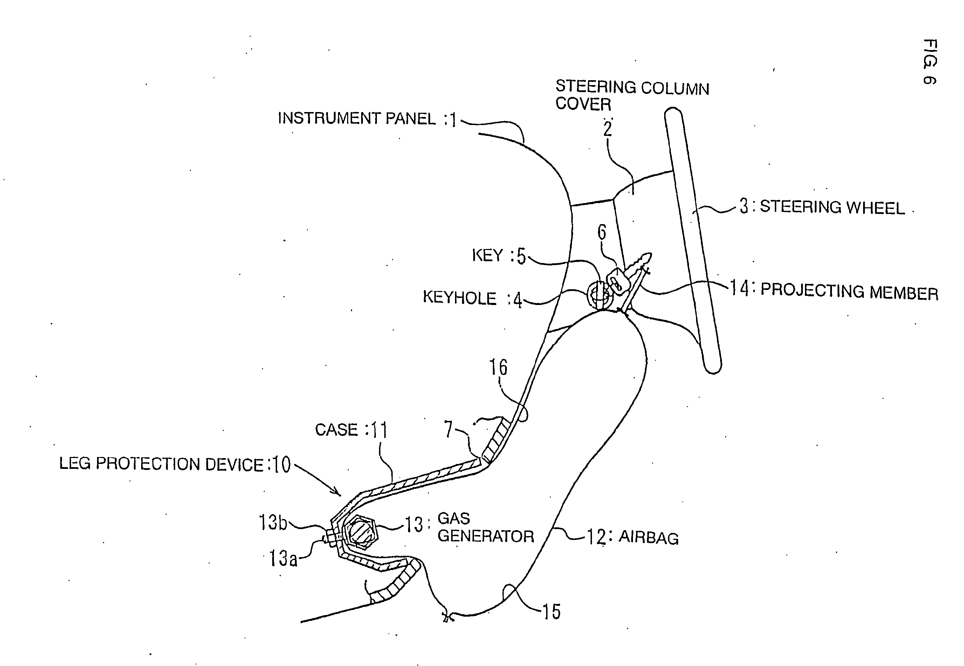

The airbag 12 has the projecting member 14 which projects upward from the top edge of the airbag 12 when the airbag 12 inflates. In the present embodiment, the projecting member 14 is provided on the top edge of the airbag 12. Therefore, as shown in Fig. 6, when the airbag 12 inflates along the bottom surface of the steering column cover 2, the projecting member 14 projects upward along the left side face of the steering column cover 2, that is, along the side face in which the keyhole 4 is formed.

In the present embodiment, the outer structure of the airbag 12 is constructed of a front panel 15 which faces the occupant and a rear panel 16 which faces the instrument panel 1 (steering-column cover 2), as shown in Fig. 2. The front panel 15 and the rear panel 16 are sewn together at the periphery thereof to form a bag shape. Reference numeral 17 denotes the seam at the periphery.

The projecting member 14 is formed integrally with the airbag 12. More specifically, as shown in Fig. 2, in the present embodiment, projecting tabs 15a and 16a project from the top edges of the front panel 15 and the rear panel 16, respectively, in left regions thereof, and the projecting member 14 is formed by sewing them together, as shown in Fig. 1(b). Reference numeral 18 denotes the seams between the projecting tabs 15a and 16a. In the present embodiment, the seams 18 extend along the diagonal lines of the projecting tabs 15a and 16a in the shape of the letter 'X'.

In the present embodiment, as shown in Fig. 2, the airbag 12 is provided with tethers 19 which connect the front panel 15 and the rear panel 16 so as to limit the inflation of the airbag 12 in the thickness direction thereof. Reference numeral 20 denotes seams with which the tethers 19 are sewn to the front panel 15 and the rear panel 16. In the present embodiment, the tethers 19 are continuous in the left-right direction, and a plurality of (two in the present embodiment) tethers 19 are arranged in the vertical direction. The left and right ends of each tether 19 are separated from the left and right edges of the airbag 12, and spaces for communicating air are provided between them.

For simplification, the tethers 19 are not shown in Figs. 4 to 6.

The gas generator 13 is disposed in the airbag 12. More specifically, a stud bolt 13a which projects from a holder (no reference numeral) of the gas generator 13 is inserted through a lower potion of the rear panel 16 of the airbag 12 and a rear wall of the case 11 and is screwed into a nut 13b. Thus, due to the engagement between the stud bolt 13a and the nut 13b, the gas generator 13 is fixed to the case 11 and the lower portion of the rear panel 16 of the airbag 12 is clamped between the holder of the gas generator 13 and the rear wall of the case 11.

In the present embodiment, when the airbag 12 is folded, first, the airbag 12 is pulled out from the case 11 and is spread. Then, as shown in Figs. 3(a) and 3(b), left and right portions 12L and 12R of the airbag 12 are folded along vertical folding lines 21 and 21 such that the rear panel 16 faces inward. Then, as shown in Fig. 3(c), the projecting member 14 is bent over to the side of the rear panel 16 along the bottom side thereof and is laminated on the folded left portion 12L. Then, the airbag 12 is rolled from the top to the bottom, and is put into the case 11 in the rolled state. At this time, the airbag 12 is rolled such that the rear panel 16 faces the center of the roll and the front panel 15 faces outward.

After the rolled airbag 12 is put into the case 11, the lid is attached to the case 11. Thus, the leg-protection device 10 is completed.

When the vehicle having the leg-protection device 10 structured as described above collides, the gas generator 13 discharges the gas and the airbag 12 starts to inflate. More specifically, the airbag 12 opens the lid by pushing it, starts inflating through the airbag-inflation opening 7 toward the front of the instrument panel 1, and deploys upward along the front face of the instrument panel 1.

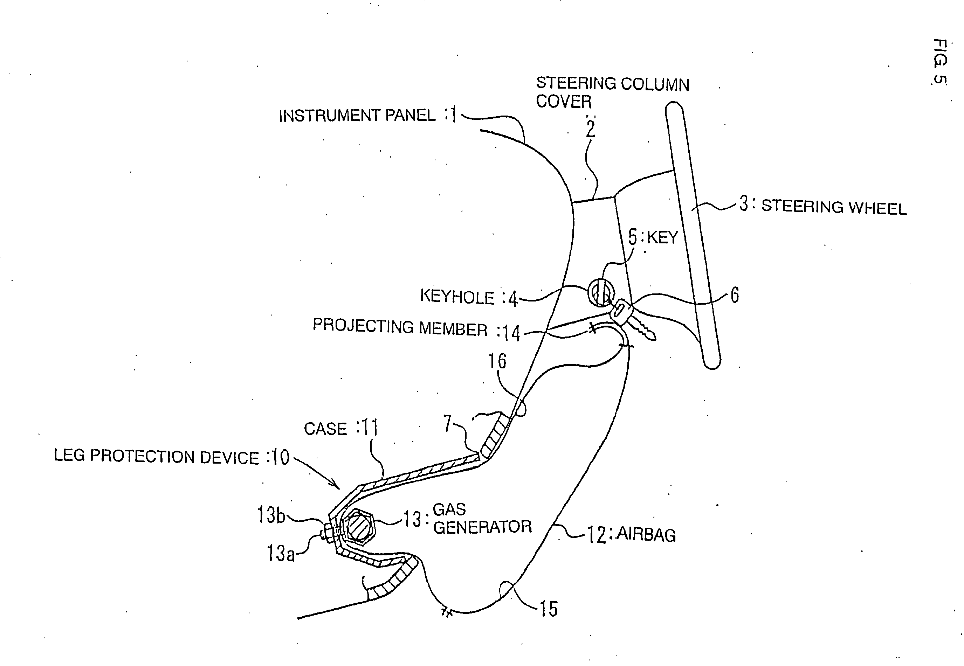

As the airbag 12 deploys upward, it is unrolled in the manner shown in Figs. 4 and 5. Then, when the airbag 12 is unrolled to the top, the left and right portions 12L and 12R, which have been folded such that the rear panel 16 faces inward, start to deploy by pivoting around the vertical folding lines 21. Accordingly, the projecting member 14, which has been laminated on the left portion 12L, bounces upward when the left portion 12L deploys, and thus the projecting member 14 projects upward from the top edge of the airbag 12, as shown in Fig. 6.

Since the projecting member 14 projects upward from the top edge of the airbag 12, even if the key chain 6 hangs down to below the steering-column cover 2 when the airbag 12 deploys along the bottom face of the steering-column cover 2, the projecting member 14 comes into contact with the key chain 6 and pushes the key chain 6 upward before the airbag 12 comes into contact with the key chain 6, as shown in Figs. 5 and 6. Accordingly, the airbag 12 is prevented from being interfered with by the key chain 6 when the airbag 12 deploys in the space below the steering-column cover 2.

Since the projecting member 14 pushes the key chain 6 upward before the airbag 12, the moving speed of the key chain 6 is reduced compared to the case in which the airbag 12 directly pushes the key chain 6 upward when the airbag 12 inflates. In addition, since the projecting member 14 comes into contact with the key chain 6, the airbag 12 receives a repulsive force in the direction opposite to the inflating direction thereof via the projecting member 14, and therefore the inflation speed of the airbag 12 immediately before the end of the inflation is also reduced.

In the above-described embodiment, the projecting member 14 is bent over to the side of the rear panel 16 when the airbag 12 is folded. However, the method for folding the projecting member 14 is not limited to this.

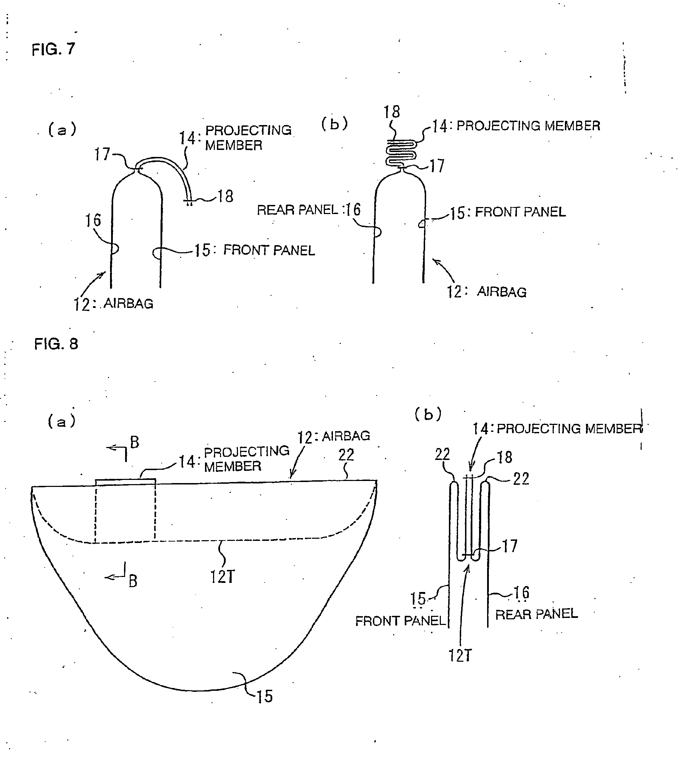

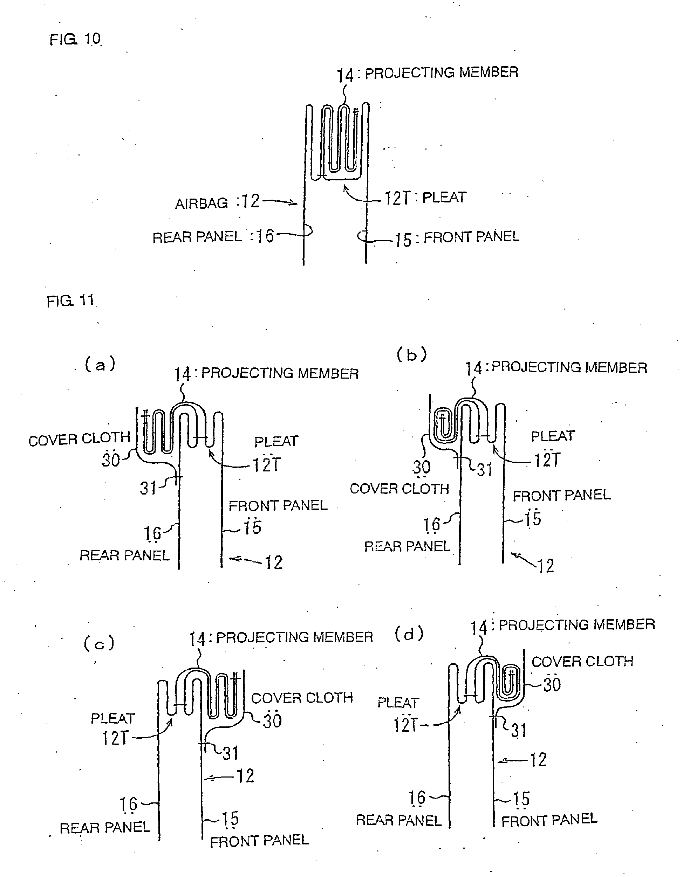

Figs. 7(a), 7(b), 8, and 10 show other methods for folding the projecting member. Figs. 7(a), 7(b), and 10 are vertical sectional views of the upper portion of the airbag, Fig. 8(a) is a front view of the airbag, and Fig. 8(b) is a sectional view of Fig. 8(a) taken along line B-B.

In Fig. 7(a), the projecting member 14 is bent over to the side of the front panel 15 of the airbag 12.

In Fig. 7(b), the projecting member 14 is folded from the front end to the base end in a zigzag style (accordion style). Instead of the zigzag style, the projecting member 14 may also be folded in a roll style, a winding style, etc., or a combination of different styles. In addition, the projecting member 14 may also be bent over to the side of the front panel 15 or the rear panel 16 of the airbag 12 and be disposed on the front panel 15 or the rear panel 16 in a folded manner.

In Fig. 8, the upper portion of the airbag 12 is bent inward along horizontal folding lines 22 such that this part is tucked in and a pleat 12T is formed. In this case, the projecting member 14 is also tucked in with the pleat 12T.

When the airbag 12 is folded in the manner shown in Fig. 8, the pleat 12T is pushed straight up toward the outside of the airbag 12 when the airbag 12 inflates. Due to the upward movement of the pleat 12T, the projecting member 14 is pushed straight up by the pleat 12T.

As shown in Fig. 10, the projecting member 14 may also be folded in a zigzag style (accordion style), a roll style, etc., and then be tucked in with the pleat 12T.

In the present invention, a cover cloth for covering the projecting member in a folded state may also be provided. Figs. 11(a) to 11(d) are vertical sectional views showing airbags provided with cover cloths.

In Fig. 11(a), a pleat 12T is formed by folding an upper portion of an airbag 12 inward. A base end of a projecting member 14 is positioned on the pleat 12T, and a front end of the projecting member 14 extending from the pleat 12T is folded on the rear panel 16 in a zigzag style (accordion style), and is covered by a cover cloth 30 provided on the rear panel 16, as shown in the figure.

The cover cloth 30 is rectangular and at least the bottom side thereof is sewn to the rear panel 16 with a seam 31. Instead of sewing, the cover cloth 30 may also be attached by heat sealing or adhesion. The cover cloth 30 may either be bonded to the rear panel only at the bottom side or be bonded to the bottom side and at least one of the left and right sides.

Since the folded projecting member 14 is covered by the cover cloth 30, the folded shape of the projecting member 14 is maintained.

In Fig. 11(b), the projecting member 14 is folded in a roll style instead of the zigzag style, and is positioned between the rear panel 16 and the cover cloth 30. As described above, the projecting member 14 may be folded in various styles other then the styles shown in the figure, and may also be folded in a combination of different styles.

In Figs. 11(a) and 11(b), the projecting member 14 is disposed on the rear panel 16 of the airbag 12 in the folded state. In comparison, in Figs. 11(c) and 11(d), the projecting member 14 is disposed on the front panel 15 in the folded state. In Figs. 11(c) and 11(d), the cover cloth 30 is attached to the front panel 15, and the folded projecting member 14 is positioned between the front panel 15 and the cover cloth 30 and is covered by the cover cloth 30.

The projecting member 14 is folded in a zigzag style in Fig. 11(c), and is folded in a roll style in Fig. 11(d). However, the folding style of the projecting member 14 is not limited to them.

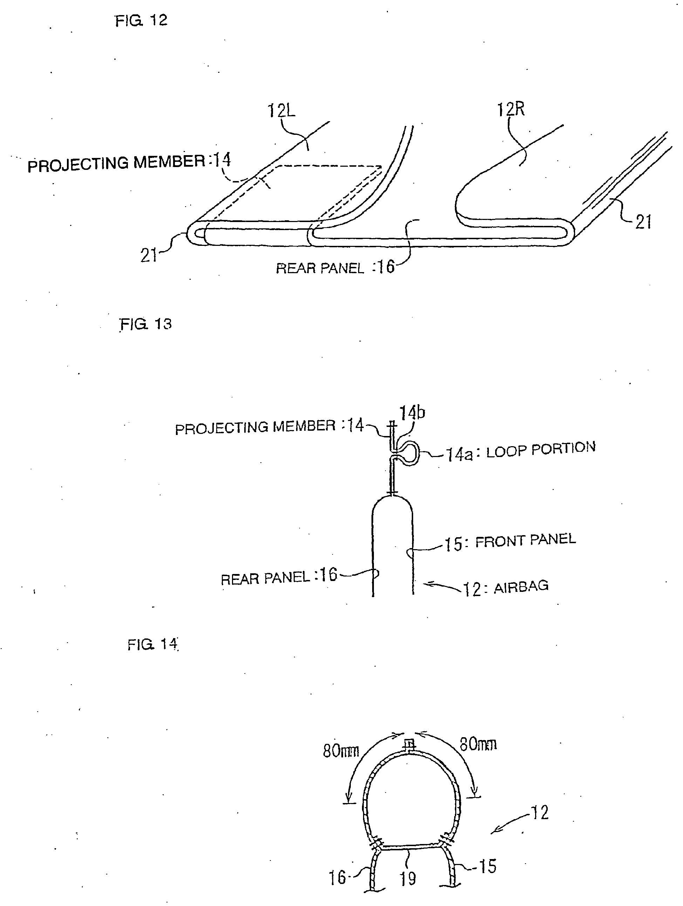

Although the projecting member 14 is laminated on the left portion 12L of the airbag 12 in Fig. 3(c), it may also be placed between the left portion 12L of the airbag 12 and the central portion of the rear panel 16, as shown in Fig. 12.

This embodiment is suitable for when the cover cloth 30 is provided, as shown in Fig. 11. In this case, first, the projecting member 14 is folded and is covered by the cover cloth 30, and the side portions of the airbag are folded. Then, the overall body of the airbag is folded.

In the embodiment shown in Figs. 1 to 6, the projecting tabs 15a and 16a which project from the top edges of the front panel 15 and the rear panel 16, respectively, of the airbag 12 is sewn together with the seams 18 which extend along the diagonal lines of the projecting tabs 15a and 16a in the shape of the letter 'X'. However, the structure for bonding the projecting tabs 15a and 16a together is not limited to this.

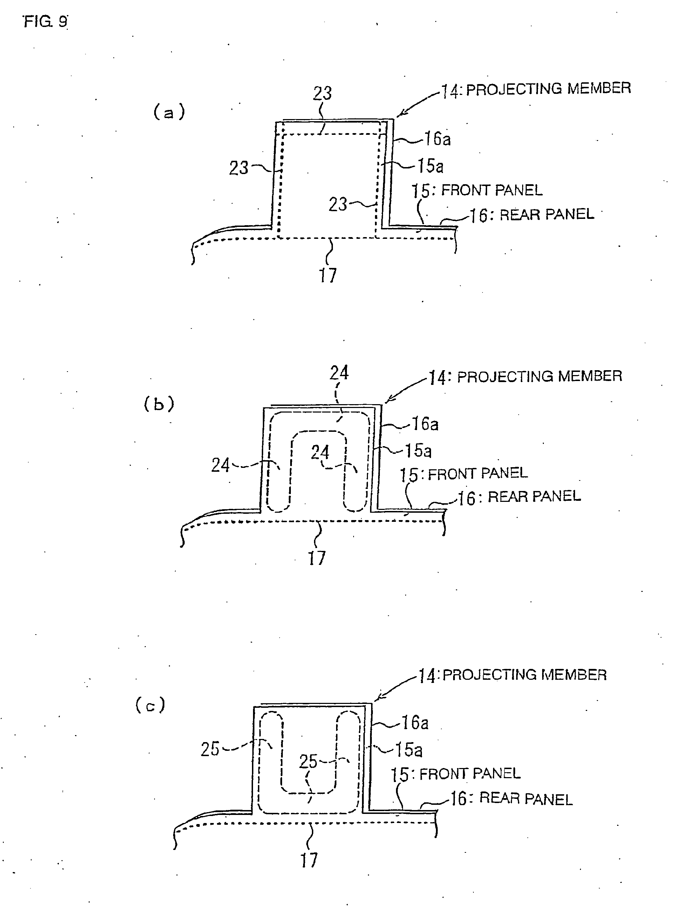

Figs. 9(a) to 9(c) are perspective views showing other structures for bonding projecting tabs together.

In Fig. 9(a), projecting tabs 15a and 16a are sewn together along the top, left, and right sides thereof with seams 23.

In Figs. 9(b) and 9(c), projecting tabs 15a and 16a are bonded together by applying an adhesive between the surfaces thereof which face each other.

In Fig. 9(b), the projecting tabs 15a and 16a are adhered to each other by applying an adhesive 24 along the top, left, and right sides.

In Fig. 9(c), the projecting tabs 15a and 16a are adhered to each other by applying an adhesive 25 along the bottom side (side parallel to a seam 17) and the left and right sides.

In the case in which the projecting tabs 15a and 16a are adhered to each other, an adhesive whose softness reduces after setting may be used. In such a case, the position and orientation of the projecting member 14 are stabilized when the projecting member 14 pushes the key chain or the like upward.

In the above-described embodiments, the front panel 15 and the rear panel 16 are both provided with the projecting tabs 15a and 16a, respectively, and the projecting member 14 is formed by bonding the projecting tabs 15a and 16a together. However, a projecting tab which functions as the projecting member may also be provided on only one of the front panel 15 and the rear panel 16.

In the present invention, the projecting member may also be provided with a reinforcing material for stabilizing the position and orientation of the projecting member when the projecting member pushes the key chain or the like upward.

Fig. 13 is a sectional view of an airbag according to another embodiment of the present invention. In this embodiment, a loop 14a is provided at the middle of a projecting member 14. Reference numeral 14b denotes a seam at the bottom of the loop 14a. The loop 14a is on the outwardly facing side of the projecting member 14 when the projecting member 14 is bent over to the side of the rear panel 16.

Since the projecting member 14 has the loop 14a, the projecting member 14 comes into contact with the key chain or the like softly when the airbag 12 inflates.

More specifically, since the loop 14a is provided at the middle of the projecting member 14, the thickness of the projecting member 14 is increased and the contact area between the projecting member 14 and the key chain or the like is increased accordingly. Therefore, the key chain or the like more easily comes into contact with the projecting member 14. In addition, the key chain or the like is more easily pushed away since the loop 14a comes into contact with it first, and the airbag 12 is reliably prevented from being interfered with by the key chain or the like. The seam 14b may either be formed such that it breaks or does not break when it comes into contact with the key chain or the like.

Two or more loops 14a may also be provided. In addition, the loop 14a may also be provided such that it is on the outwardly facing side of the projecting member 14 when the projecting member 14 is bent over to the side of the front panel 15.

The above-described embodiments simply show the examples of the present invention, and the present invention is not limited to these embodiments. As shown in Fig. 14, the length between the top end of the airbag 12 to the position at which the distance between the front and rear panels in the top room is at a maximum is preferably set to about 80 mm. However, the present invention is also not limited to this.

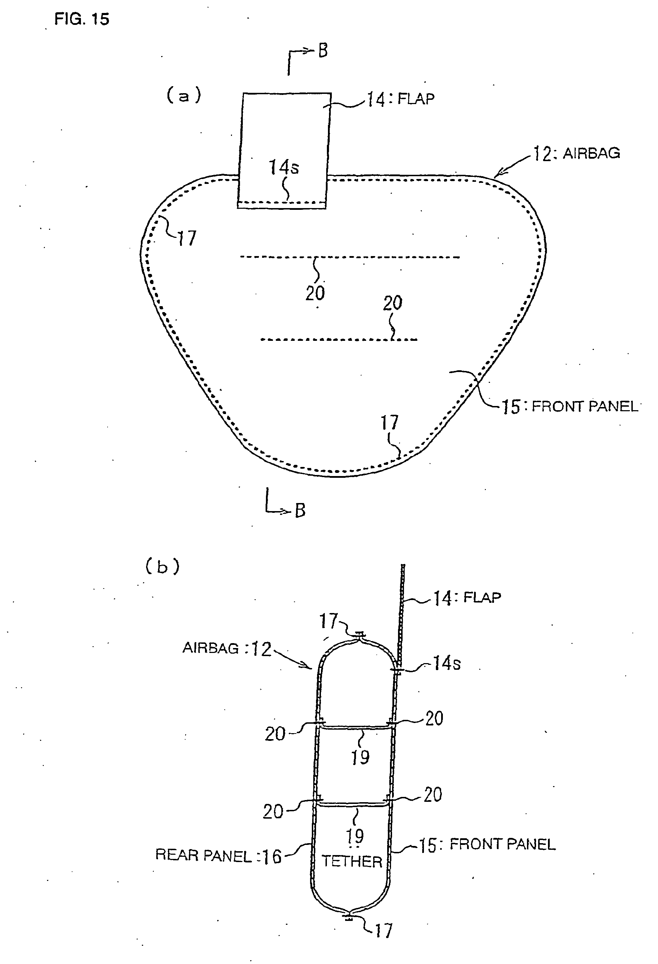

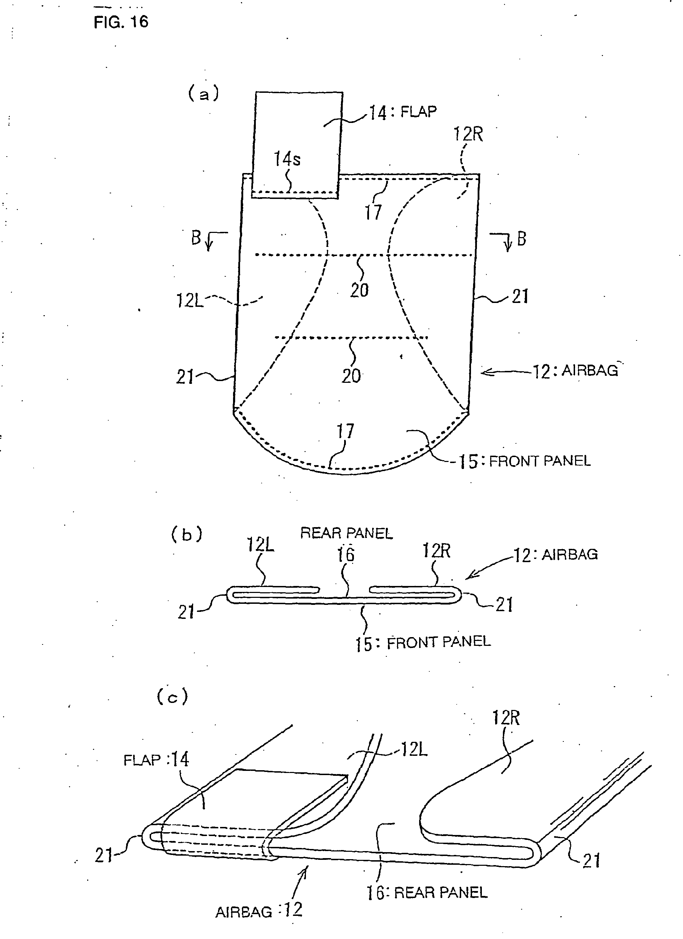

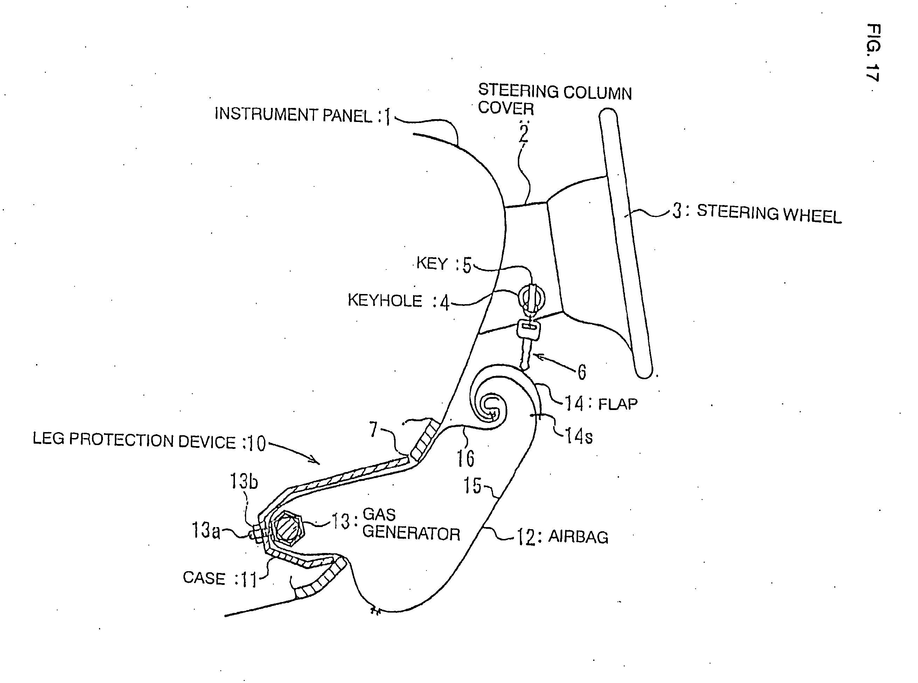

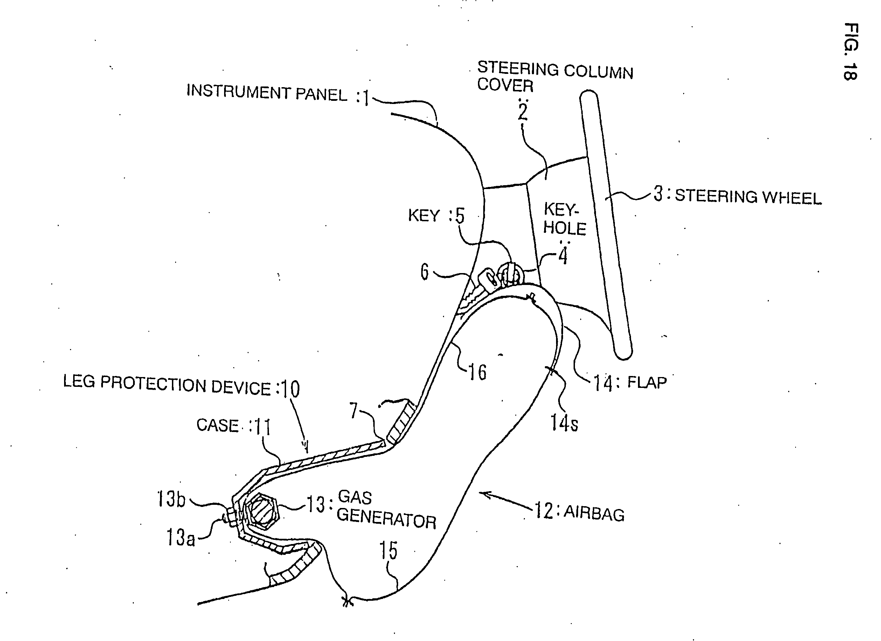

Fig. 15(a) is a front view of an airbag included in a leg-protection device for a vehicle occupant according to an embodiment of the present invention, and Fig. 15(b) is a sectional view of Fig. 15(a) taken along line B-B. Fig. 16(a) is a front view showing the airbag in a partially folded state, Fig. 16(b) is a sectional view of Fig. 16(a) taken along line B-B, and Fig. 16(c) is a perspective view showing the state in which a flap, which functions as a projecting member, is bent. Figs. 17 and 18 are vertical sectional views showing the manner in which the airbag inflates. In the following description, a "left-right direction" refers to the width direction of the vehicle, and is the same as the left-right direction in Fig. 15(a).

As shown in Figs. 17 and 18, an instrument panel 1 is provided in front of a driver's seat of a vehicle, and a steering-column cover 2 is provided to cover a steering column (not shown) which projects from the instrument panel 1. A steering wheel 3 is fixed to a steering shaft (not shown) which projects from the steering column.

In the present embodiment, a keyhole 4 is provided in a left side (as seen from the driver) of the steering-column cover 2. A key 5 is inserted in the keyhole 4, and a key chain 6 (shown as another key in Figs. 17 and 18) is attached to the key 5. As shown in Fig. 17, the key chain 6 hangs down beyond the bottom face of the steering-column cover 2 in a normal state (state in which the key chain 6 is not pushed up by a flap 14 which functions as the projecting member as described below).

A leg-protection device 10 for a vehicle occupant is installed below the steering-column cover 2.

The leg-protection device 10 includes a container-shaped case 11 having an opening (no reference numeral) in the front face which faces the occupant, an airbag 12 connected to the case 11, and a gas generator 13 for inflating the airbag 12.

The case 11 is fitted in an airbag-inflation opening 7 formed in the instrument panel 1 at a position below the steering-column cover 2. In a normal state, the airbag 12 is contained in the case 11 in a folded state, and a lid (not shown) is attached to cover the opening in the front face of the case 11 containing the folded airbag 12. When the airbag 12 inflates, the lid opens by being pushed by the airbag 12 and uncovers the airbag-inflation opening 7.

The airbag 12 receives gas from the gas generator 13, starts inflating through the airbag-inflation opening 7 toward the front of the instrument panel 1, and deploys upward along the instrument panel 1 in the region below the steering-column cover 2 and then along the bottom face of the steering-column cover 2, as shown in Figs. 17 and 18.

As shown in Fig. 15(a), in the present embodiment, the airbag 12 is shaped such that the size thereof in the left-right direction (the width direction of the vehicle) increases toward the top, and is larger than the size of the steering-column cover 2 in the left-right direction at the top of the airbag 12. When the airbag 12 inflates along the bottom face of the steering-column cover 2, an upper portion of the airbag 12 faces the bottom face of the steering-column cover 2 at the central region thereof and extends beyond the left and right sides of the steering-column cover 2 at the left and right regions thereof.

The airbag 12 has the flap 14 which functions as the projecting member and projects upward from the top edge of the airbag 12 (the front end of the airbag 12 in the inflating direction) when the airbag 12 inflates. In the present embodiment, the flap 14 is disposed on the upper left position of the airbag 12.

In the present embodiment, the outer structure of the airbag 12 is constructed of a front panel 15 which faces the occupant and a rear panel 16 which faces the instrument panel 1 (steering-column cover 2). The front panel 15 and the rear panel 16 are sewn together at the periphery thereof to form a bag shape. Reference numeral 17 denotes the seam at the periphery.

The flap 14 is formed independently of both the front panel 15 and the rear panel 16. One end (base end) of the flap 14 is sewn to the front panel 15 at a position near the top edge thereof, as shown in Fig. 15(b), and the other end (front end) is disposed on the side of the rear panel 16 such that the flap 14 extends over the upper portion of the airbag 12. Reference numeral 14s denotes the seam with which the base end of the flap 14 is sewn to the front panel 15. As shown in the figure, the front end of the flap 14 is a free end (free from the rear panel 16).

In the present embodiment, as shown in Fig. 15(b), the airbag 12 is provided with tethers 19 which connect the front panel 15 and the rear panel 16 so as to limit the inflation of the airbag 12 in the thickness direction thereof. Reference numeral 20 denotes seams with which the tethers 19 are sewn to the front panel 15 and the rear panel 16. In the present embodiment, the tethers 19 are continuous in the left-right direction, and a plurality of (two in the present embodiment) tethers 19 are arranged in the vertical direction. The left and right ends of each tether 19 are separated from the left and right edges of the airbag 12, and spaces for communicating air are provided between them.

For simplification, the tethers 19 are not shown in Figs. 17 and 18.

The gas generator 13 is disposed in the airbag 12. More specifically, a stud bolt 13a which projects from a holder (no reference numeral) of the gas generator 13 is inserted through a lower potion of the rear panel 16 of the airbag 12 and a rear wall of the case 11 and is screwed into a nut 13b. Thus, due to the engagement between the stud bolt 13a and the nut 13b, the gas generator 13 is fixed to the case 11 and the lower portion of the rear panel 16 of the airbag 12 is clamped between the holder of the gas generator 13 and the rear wall of the case 11.

In the present embodiment, when the airbag 12 is folded, first, the airbag 12 is pulled out from the case 11 and is spread. Then, as shown in Figs. 16(a) and 16(b), left and right portions 12L and 12R of the airbag 12 are folded along vertical folding lines 21 and 21 such that the rear panel 16 faces inward. Then, as shown in Fig. 16(c), the flap 14 is bent over to the side of the rear panel 16 and a front-end portion of the flap 14 is laminated on the folded left portion 12L. Then, the airbag 12 is rolled from the top to the bottom, and is put into the case 11 in the rolled state. At this time, the airbag 12 is rolled such that the rear panel 16 faces the center of the roll and the front panel 15 faces outward.

After the rolled airbag 12 is put into the case 11, the lid is attached to the case 11. Thus, the leg-protection device 10 is completed.

When the vehicle having the leg-protection device 10 structured as described above collides, the gas generator 13 discharges the gas and the airbag 12 starts to inflate. More specifically, the airbag 12 opens the lid by pushing it, starts inflating through the airbag-inflation opening 7 toward the front of the instrument panel 1, and deploys upward along the front face of the instrument panel 1.

When viewed from above, the rolled airbag 12 deploys upward while rotating in the direction from the instrument panel 1 to the occupant. Because of this rotation, when the airbag 12 is unrolled to the top, the top edge of the airbag 12 moves upward along a curve in the direction from the instrument panel 1 toward the occupant, as shown in Figs. 17 and 18. At this time, the front-end portion of the flap 14 is pushed upward by the top edge of the airbag 12 and projects upward beyond the top edge of the airbag 12.

In addition, in the present embodiment, when the airbag 12 is unrolled to the top, the left and right portions 12L and 12R, which have been folded such that the rear panel 16 faces inward, start to deploy by pivoting around the vertical folding lines 21. Accordingly, the flap 14, which has been laminated on the left portion 12L, bounces upward when the left portion 12L deploys, and thus the upward movement of the flap 14 is accelerated.

Since the flap 14 projects upward from the top edge of the airbag 12, even if the key chain 6 hangs down to below the steering-column cover 2 when the airbag 12 deploys along the bottom face of the steering-column cover 2, the flap 14 comes into contact with the key chain 6 and pushes the key chain 6 upward before the airbag 12 comes into contact with the key chain 6. Accordingly, the airbag 12 is prevented from being interfered with by the key chain 6 when the airbag 12 deploys in the space below the steering-column cover 2.

Since the flap 14 pushes the key chain 6 upward before the airbag 12, the moving speed of the key chain 6 is reduced compared to the case in which the airbag 12 directly pushes the key chain 6 upward when the airbag 12 inflates. In addition, since the flap 14 comes into contact with the key chain 6, the airbag 12 receives a repulsive force in the direction opposite to the inflating direction thereof via the flap 14, and therefore the inflation speed of the airbag 12 immediately before the end of the inflation is also reduced.

In the present embodiment, the airbag 12 is rolled from the top to the bottom such that the rear panel 16 faces the center of the roll. Accordingly, when the airbag 12 inflates, it is unrolled such that it rotates on the front portions of the occupant's legs. Therefore, the airbag 12 smoothly deploys without being caught by the front portions of the occupant's legs.

In the present embodiment, the base end of the flap 14 is attached to the front panel 15 of the airbag 12 at a position near the top edge and the front end of the flap 14 is disposed on the side of the rear panel 16. However, the arrangement of the flap 14 is not limited to this. For example, according to the present invention, the base end of the flap may also be attached to the rear panel of the airbag and the front end thereof may be disposed on the side of the front panel.

The method for folding the airbag is also not limited to the method described above.

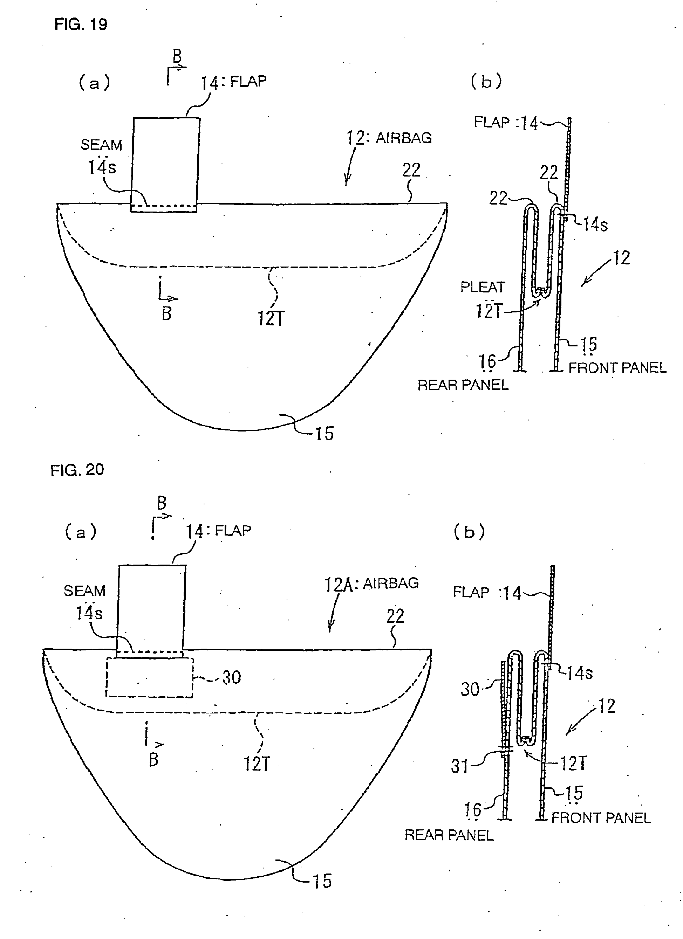

Fig. 19(a) is a front view showing another method for folding the airbag, and Fig. 19(b) is a sectional view of Fig. 19(a) taken along line B-B.

In this embodiment, when the airbag 12 is folded, first, the airbag 12 is spread and a part of the upper portion of the airbag 12 above the base end of the flap 14 (above the seam 14s) is folded inward along folding lines 22 such that this part is tucked in and a pleat 12T is formed. The front-end portion of the flap 14 is bent over the pleat 12T to the side of the rear panel 16.

In this embodiment, the airbag 12 is folded similarly to the above-described embodiment shown in Figs. 15 to 18 except for the step of folding the upper portion of the airbag 12 inward to form the pleat 12T.

When the airbag 12 in which the pleat 12T is formed by folding the upper portion thereof as above inflates, the pleat 12T is pushed straight up toward the outside of the airbag 12 due to the gas pressure in the airbag when the upper portion of the airbag inflates. Due to the upward movement of the pleat 12T, the front-end portion of the flap 14 is pushed upward and projects beyond the top edge of the airbag 12. Accordingly, the flap 14 bounces upward.

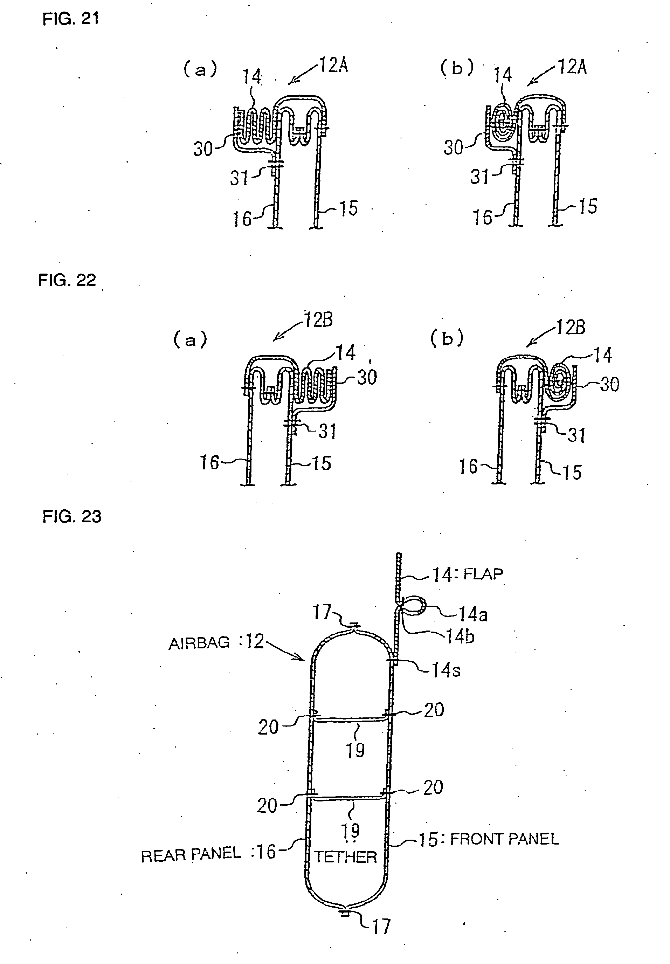

Fig. 20(a) is a front view of an airbag 12A according to a modification of the airbag shown in Fig. 19 in which a cover cloth 30 for covering a folded flap (projecting member) 14 is provided on a rear panel 16, and Fig. 20(b) is a sectional view of Fig. 20(a) taken along line B-B. Fig. 21 shows sectional views of structures in which the flap 14 is folded.

The cover cloth 30 is rectangular and at least the bottom side thereof is sewn to the rear panel 16 with a seam 31. Instead of sewing, the cover cloth 30 may also be attached by heat sealing or adhesion. The folded flap 14 is disposed between the cover cloth 30 and the rear panel 16, and is thereby covered by the cover cloth 30.

The cover cloth 30 may either be sewn to the rear panel only at the bottom side or be sewn at the bottom side and at least one of the left and right sides.

Since the folded flap 14 is covered by the cover cloth 30, the folded shape of the flap 14 is maintained.

The flap 14 may be folded in an accordion style as shown in Fig. 21(a), a roll style as shown in Fig. 21(b), or a combination of the accordion style and the roll style (not shown).

In the above-described embodiments, the flap 14 is attached to the front panel 15 such that it extends over the upper portion of the airbag to the side of the rear panel 16. However, as shown in Fig. 22, a flap 14 may also be attached to a rear panel 16 such that it extends over an upper portion of an airbag 12B to the side of a front panel 15. In Fig. 22, a cover cloth 30 for covering the flap 14 in the folded state is attached to the front panel 15 with a seam 31. The flap 14 may be folded in an accordion style as shown in Fig. 22(a), a roll style as shown in Fig. 22(b), or a combination of the accordion style and the roll style (not shown).

Fig. 23 is a sectional view of an airbag according to another embodiment of the present invention. In this embodiment, a loop 14a is provided at the middle of a flap 14. Reference numeral 14b denotes a seam at the bottom of the loop 14a. The loop 14a is at the top of the flap 14 in the state in which the flap 14 extends over an upper portion of an airbag 12.

Since the flap 14 has the loop 14a, the flap 14 comes into contact with the key chain or the like softly when the airbag 12 inflates.

More specifically, since the loop 14a is provided at the middle of the flap 14, the thickness of the flap 14 is increased and the contact area between the flap 14 and the key chain or the like is increased accordingly. Therefore, the key chain or the like more easily comes into contact with the flap 14. In addition, the key chain or the like is more easily pushed away since the loop 14a comes into contact with it first, and the airbag is reliably prevented from being interfered with by the key chain or the like. The seam 14b may either be formed such that it breaks or does not break when it comes into contact with the key chain or the like.

Two or more loops 14a may also be provided. In addition, although the flap 14 is attached to the front panel 15 in Fig. 23, it may also be attached to the rear panel 16.

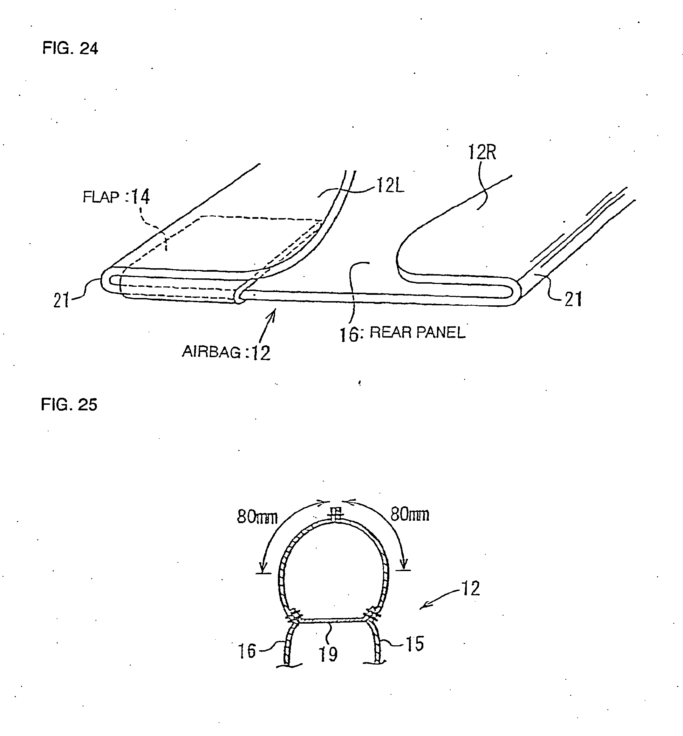

In addition, although the front-end portion of the flap 14 is laminated on the left portion 12L in Fig. 16(c), it may also be placed between the left portion 12L and the central portion of the rear panel 16, as shown in Fig. 24.

This embodiment is suitable for when the cover cloth 30 is provided and the pleat 12T is formed by folding the upper portion of the airbag inward, as shown in Figs. 20 to 22. In this case, first, the upper portion of the airbag is folded inward and the flap 14 is bent over to the side opposite to the side at which it is attached. Then, the flap 14 is folded and is covered by the cover cloth 30, and the side portions of the airbag are folded. Finally, the overall body of the airbag is folded.

The above-described embodiments simply show the examples of the present invention, and the present invention is not limited to these embodiments. As shown in Fig. 25, the length between the top end of the airbag 12 to the position at which the distance between the front and rear panels in the top room is at a maximum is preferably set to about 80 mm. However, the present invention is also not limited to this.

## Claims

1. A leg-protection device for a vehicle occupant, the leg-protection device being adapted to be placed under a steering column and comprising:
an airbag (12;12A) which is inflatable upward along a bottom face of a steering-column cover (2); **characterized in that**
a projecting member (14, 15a, 16a) provided on the airbag and projecting from the front end of the airbag in the inflating direction when the airbag inflates.

2. A leg-protection device according to claim 1, wherein the projecting member is provided integrally with the airbag.

3. The leg-protection device according to Claim 1 or 2, wherein the projecting member is tab-shaped.

4. The leg-protection device according to Claim 3, wherein the projecting member is folded on the side facing the occupant or on the opposite side.

5. The leg-protection device according to Claim 4, wherein the projecting member is folded in an accordion style, a roll style, or a combination of the accordion style and the roll style.

6. The leg-protection device according to Claims 4 or 5, further comprising a cover cloth (30) which covers the projecting member in a folded state.

7. The leg-protection device according to Claim 3, wherein an upper portion of the airbag is folded inward such that the upper portion is tucked in, and
wherein the tab-shaped projecting member is folded together with the upper portion of the airbag.

8. A leg-protection device according to claim 1,
wherein the projecting member is formed independently of the airbag.

9. The leg-protection device according to Claim 8, wherein the projecting member is tab-shaped and has a base end attached to the airbag on the side facing the occupant and a front end disposed on the side opposite to the occupant such that the projecting member extends over an upper portion of the airbag.

10. The leg-protection device according to Claim 9, further comprising a cover cloth (30) provided on the airbag on the side opposite to the occupant and covering the projecting member in a folded state.

11. The leg-protection device according to Claim 8, wherein the projecting member is tab-shaped and has a base end attached to the airbag on the side opposite to the occupant and a front end disposed on the side facing the occupant such that the projecting member extends over an upper portion of the airbag.

12. The leg-protection device according to Claim 11, further comprising a cover cloth (30) provided on the airbag on the side facing the occupant and covering the projecting member in a folded state.

13. The leg-protection device according to one of Claims 9 to 12, wherein the upper portion of the airbag is folded inward such that the upper portion is tucked in, and the projecting member extends over the inwardly-folded upper portion and is folded in an accordion style, a roll style, or a combination of the accordion style and the roll style.

## Patentansprüche

1. Beinschutzvorrichtung für einen Fahrzeuginsassen, die unter einer Lenksäule angeordnet werden kann und aufweist:
einen Airbag (12; 12A), der nach oben entlang einer Unterseite einer Lenksäulenabdeckung (2) aufblasbar ist, **dadurch gekennzeichnet, dass**
ein Vorsprung (14, 15a, 16a) am Airbag vorgesehen ist und vom Vorderende des Airbags in Aufblasrichtung vorsteht, wenn der Airbag aufgeblasen wird.

2. Beinschutzvorrichtung nach Anspruch 1, wobei der Vorsprung einstückig mit dem Airbag ausgebildet ist.

3. Beinschutzvorrichtung nach Anspruch 1 oder 2, wobei der Vorsprung lappenförmig ist.

4. Beinschutzvorrichtung nach Anspruch 3, wobei der Vorsprung an der zum Insassen weisenden Seite oder auf der gegenüberliegenden Seite gefaltet ist.

5. Beinschutzvorrichtung nach Anspruch 4, wobei der Vorsprung akkordeonartig, gerollt oder kombiniert akkordeonartig und gerollt gefaltet ist.

6. Beinschutzvorrichtung nach Anspruch 4 oder 5, ferner mit einem Abdecktuch (30), das den Vorsprung in einem gefalteten Zustand abdeckt.

7. Beinschutzvorrichtung nach Anspruch 3, wobei ein Oberteil des Airbags nach innen gefaltet ist, so dass der obere Abschnitt eingeschlagen ist, und
wobei der lappenförmige Vorsprung zusammen mit dem oberen Abschnitt des Airbags gefaltet ist.

8. Beinschutzvorrichtung nach Anspruch 1, wobei der Vorsprung unabhängig vom Airbag ausgebildet ist.

9. Beinschutzvorrichtung nach Anspruch 8, wobei der Vorsprung lappenförmig ist und ein Basisende, das an dem Airbag an der zum Insassen weisenden Seite befestigt ist, und ein Vorderende aufweist, das an der dem Insassen gegenüberliegenden Seite angeordnet ist, so dass der Vorsprung sich über den oberen Abschnitt des Airbags hinweg erstreckt.

10. Beinschutzvorrichtung nach Anspruch 9, ferner mit einem Abdecktuch (30), das an dem Airbag an der dem Insassen gegenüberliegenden Seite vorgesehen ist und den Vorsprung in einem gefalteten Zustand abdeckt.

11. Beinschutzvorrichtung nach Anspruch 8, wobei der Vorsprung lappenförmig ist und ein Basisende, das an dem Airbag an der dem Insassen gegenüberliegenden Seite befestigt ist, und ein Vorderende aufweist, das an der zum Insassen weisenden Seite angeordnet ist, so dass der Vorsprung sich über einen oberen Abschnitt des Airbags hinweg erstreckt.

12. Beinschutzvorrichtung nach Anspruch 11, ferner mit einem Abdecktuch (30), das an dem Airbag an der zum Insassen weisenden Seite vorgesehen ist und den Vorsprung in einem gefalteten Zustand abdeckt.

13. Beinschutzvorrichtung nach einem der Ansprüche 9 bis 12, wobei der obere Abschnitt des Airbags nach einwärts so gefaltet ist, dass der obere Abschnitt eingefaltet ist, und wobei sich der Vorsprung über den nach innen gefalteten oberen Abschnitt erstreckt und akkordeonartig, gerollt oder kombiniert akkordeonartig und gerollt gefaltet ist.

## Revendications

1. Dispositif pour protéger les jambes d'un occupant de véhicule, le dispositif pour protéger les jambes étant adapté pour être placé en dessous d'une colonne de direction et comprenant :
un coussin gonflable de sécurité (12, 12A) qui est gonflable vers le haut le long d'une face inférieure d'un couvercle de colonne de direction (2), **caractérisé en ce que** :
un élément saillant (14, 15a, 16a) est disposé sur le coussin gonflable de sécurité et en saillie depuis l'extrémité avant du coussin gonflable de sécurité dans la direction de gonflage quand le coussin gonflable de sécurité se gonfle.

2. Dispositif pour protéger les jambes selon la revendication 1, dans lequel l'élément saillant est disposé intégralement avec le coussin gonflable de sécurité.

3. Dispositif pour protéger les jambes selon la revendication 1 ou 2, dans lequel l'élément saillant est en forme d'onglet.

4. Dispositif pour protéger les jambes selon la revendication 3, dans lequel l'élément saillant est replié sur le côté orienté face à l'occupant ou sur le côté opposé.

5. Dispositif pour protéger les jambes selon la revendication 4, dans lequel l'élément saillant est replié en forme d'accordéon, en forme de rouleau, ou selon une combinaison de la forme d'accordéon et de la forme de rouleau.

6. Dispositif pour protéger les jambes selon la revendication 4 ou 5, comprenant en outre un tissu de couverture (30) qui recouvre l'élément saillant dans un état replié.

7. Dispositif pour protéger les jambes selon la revendication 3, dans lequel une partie supérieure du coussin gonflable de sécurité est repliée vers l'intérieur de telle sorte que la partie supérieure soit bordée, et
dans lequel l'élément saillant en forme d'onglet est replié avec la partie supérieure du coussin gonflable de sécurité.

8. Dispositif pour protéger les jambes selon la revendication 1, dans lequel l'élément saillant est formé indépendamment du coussin gonflable de sécurité.

9. Dispositif pour protéger les jambes selon la revendication 8, dans lequel l'élément saillant est en forme d'onglet et comporte une extrémité de base fixée au coussin gonflable de sécurité sur le côté orienté vers l'occupant et une extrémité avant disposée sur le côté opposé à l'occupant, de telle sorte que l'élément saillant s'étende sur une partie supérieure du coussin gonflable de sécurité.

10. Dispositif pour protéger les jambes selon la revendication 9, comprenant en outre un tissu de couverture (30) disposé sur le coussin gonflable de sécurité sur le côté opposé à l'occupant et couvrant l'élément saillant dans un état replié.

11. Dispositif pour protéger les jambes selon la revendication 8, dans lequel l'élément saillant est en forme d'onglet et comporte une extrémité de base fixée au coussin gonflable de sécurité sur le côté opposé à l'occupant et une extrémité avant disposée sur le côté orienté face à l'occupant, de telle sorte que l'élément saillant s'étende sur une partie supérieure du coussin gonflable de sécurité.

12. Dispositif pour protéger les jambes selon la revendication 11, comprenant en outre un tissu de couverture (30) disposé sur le coussin gonflable de sécurité sur le côté orienté face à l'occupant et couvrant l'élément saillant dans un état replié.

13. Dispositif pour protéger les jambes selon l'une quelconque des revendications 9 à 12, dans lequel la partie supérieure du coussin gonflable de sécurité est repliée vers l'intérieur de telle sorte que la partie supérieure soit bordée, et l'élément saillant s'étende sur la partie supérieure repliée vers l'intérieur et soit replié en forme d'accordéon, en forme de rouleau, ou selon une combinaison de la forme d'accordéon et de la forme de rouleau.
